# FASCICULE DE BREVET EUROPEEN

(11) **EP 3 011 142 B1**
(45) Date de publication et mention de la délivrance du brevet: **14.06.2017**
(21) Numéro de dépôt: 14738879.7
(22) Date de dépôt: 18.06.2014
(51) Int. Cl.: F01D 25/16, F02C 7/32, F01D 25/24

(54) **CARTER INTERMÉDIAIRE AMÉLIORÉ DE TURBOMACHINE ET ENSEMBLE D'ENTRAINEMENT DE BOITIER D'ACCESSOIRE**
VERBESSERTES ZWISCHENGEHÄUSE FÜR EINE TURBOMASCHINE UND HILFSGETRIEBE-ANTRIEBSANORDNUNG
IMPROVED INTERMEDIATE CASING FOR TURBOMACHINE AND ACCESSORY GEARBOX DRIVE ASSEMBLY

(30) Priorité: 21.06.2013 FR 1355913
(43) Date de publication de la demande: 27.04.2016
(73) Titulaire: SNECMA, 75015 Paris (FR)
(72) Inventeur: LEMARCHAND, Kevin, F-77550 Moissy-Cramayel Cedex (FR); BRAULT, Michel, Gilbert, Roland, F-77550 Moissy-Cramayel Cedex (FR)
(74) Mandataire: Regimbeau
(86) Numéro de dépôt international: PCT/FR2014/051514
(87) Numéro de publication internationale: WO 2014/202905

(56) Documents cités:
- EP-A1- 2 239 440
- EP-A2- 2 123 883
- WO-A1-2005/012696
- US-A1- 2006 248 900

## Description

### DOMAINE DE L'INVENTION

L'invention concerne un carter intermédiaire de turbomachine et un ensemble d'entrainement de machines auxiliaires de turbomachine comprenant un tel carter.

### ETAT DE LA TECHNIQUE

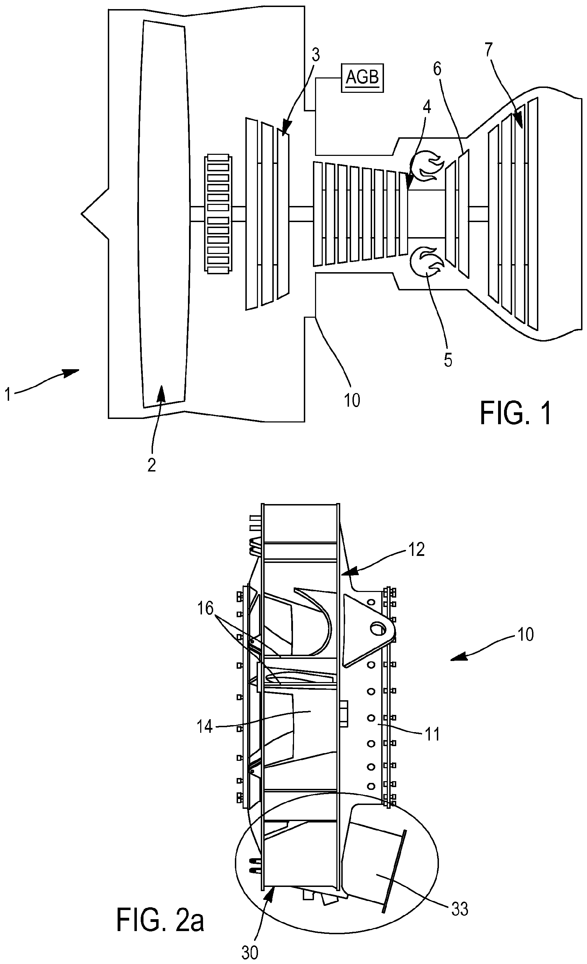

Un exemple de turbomachine est représenté schématiquement en figure 1.

Une turbomachine 1 comporte typiquement une soufflante 2 d'admission d'air, une première section de compression de l'air 3 admis dans le moteur, dite section basse pression, et une seconde section de compression 4 dite section haute pression. L'air y est comprimé avant d'être admis dans une chambre de combustion 5 et mélangé avec du carburant pour y être brulé.

Les gaz de combustion chauds issus de cette combustion sont ensuite détendus dans différents étages de turbine : un étage de turbine haute pression 6 se trouvant immédiatement en aval de la chambre de combustion, et un étage de turbine basse pression 7 détendant à nouveau les gaz en aval.

Un arbre moteur 8 est entrainé par les deux étages de turbine et entraine en rotation les étages à basse et haute pressions de compresseurs.

La turbomachine comprend en outre une pluralité de machines accessoires regroupées au sein d'un boitier d'accessoires (appelé en anglais Accessories Gearbox ou encore sous l'acronyme AGB), ces machines étant des équipements du type pompes, circuits de lubrification, démarreur, etc., qui, bien que ne servant pas à la propulsion sont nécessaires au fonctionnement de la turbomachine.

Un tel boitier comprend un train d'engrenages qui est entrainé en rotation en prélevant de la puissance à l'arbre moteur au niveau du carter intermédiaire, c'est-à-dire le carter s'étendant autour de l'arbre moteur au niveau de l'intervalle entre le compresseur basse pression et le compresseur haute pression.

Pour ce faire, un arbre radial est contenu dans le carter intermédiaire 10, qui est engrené par l'arbre moteur au moyen d'un engrenage conique intermédiaire (Intermediate GearBox ou IGB), et qui lui-même engrène le boitier d'accessoires via un engrenage conique contenu dans un boitier de renvoi d'angle (ou en anglais TGB pour Transfert GearBox) monté sur le carter intermédiaire.

Lorsqu'une maintenance doit avoir lieu sur l'arbre radial, il est nécessaire de retirer le boitier de renvoi d'angle, voire de retirer également tout le support de machines accessoires, ce qui représente des durées et donc des coûts de maintenance importants.

De plus, dans certaines turbomachines, le boitier d'accessoires peut être déporté axialement de manière assez lointaine par rapport au boitier de renvoi d'angle, ce qui implique de monter un arbre supplémentaire entre ces deux éléments.

Or, dans le cadre d'efforts pour réduire le bruit causé par une turbomachine, des développements sont menés pour augmenter les diamètres des turbomachines tout en essayant de réduire leur longueur axiale. Il est donc nécessaire de limiter l'éloignement du boitier d'accessoires par rapport au boitier de renvoi d'angle.

Enfin, il est nécessaire de réduire la masse des turbomachines pour limiter leur consommation de carburant et ainsi réduire les coûts de vol.

### PRESENTATION DE L'INVENTION

Un but de l'invention est de remédier aux problèmes cités ci-avant.

En particulier, l'invention a pour but de proposer un ensemble d'entrainement d'un boitier d'accessoires qui permette d'accéder à l'arbre radial sans avoir à démonter le boitier de renvoi d'angle ou le boitier d'accessoires.

Un autre but de l'invention est de réduire la masse et l'encombrement axial d'une turbomachine.

A cet égard, l'invention a pour objet un carter intermédiaire de turbomachine, comprenant :
- un moyeu interne, adapté pour recevoir un arbre de compresseur de turbomachine,
- une virole externe, et
- une pluralité de bras radiaux reliant le moyeu et la virole, l'un des bras comprenant un logement interne d'arbre radial d'entrainement de machines auxiliaires,
le carter étant caractérisé en ce qu'il comprend en outre un boitier de renvoi d'angle de l'arbre radial agencé dans la virole externe, ledit boitier étant formé intégralement avec la virole externe, et le boitier de renvoi d'angle comprend un logement d'engrenage entre un arbre radial et un boitier d'accessoires, ledit logement comprenant une ouverture débouchant à la périphérie de la virole externe.

Avantageusement, mais facultativement, le carter intermédiaire selon l'invention peut en outre comprendre au moins l'une des caractéristiques suivantes :
- le boitier de renvoi d'angle comprend en outre un bras de liaison avec un boitier d'accessoires, ledit bras étant creux pour recevoir un train d'engrenage du boitier d'accessoires, et le logement d'engrenage comprenant en outre une ouverture de communication avec ledit bras,
- l'ouverture du logement est disposée en regard du bras radial comprenant un logement interne d'arbre radial.

L'invention a également pour objet un ensemble d'entrainement d'un boitier d'accessoires de turbomachine, comprenant un carter intermédiaire, un arbre radial s'étendant dans un bras radial du carter, un ensemble d'engrenage de l'arbre radial à un boitier d'accessoires, monté à une extrémité de l'arbre radial, et un boitier de renvoi d'angle de l'arbre radial, le carter étant conforme à la présentation qui précède, le boitier de renvoi d'angle étant formé intégralement dans ledit carter.

Avantageusement, mais facultativement, l'ensemble d'entrainement selon l'invention peut en outre comprendre au moins l'une des caractéristiques suivantes : l'ensemble comprenant en outre un couvercle couvrant l'ouverture du logement du carter à la périphérie de la virole, ledit couvercle comprenant une connexion d'admission d'huile et une connexion d'évacuation d'huile.
- l'ensemble d'engrenage comporte un pignon conique comprenant un moyeu adapté pour recevoir l'extrémité de l'arbre radial, et l'ensemble d'engrenage comprend un dispositif d'arrêt axial de l'arbre radial dans le moyeu du pignon.
- le moyeu du pignon conique comprend une rainure circonférentielle interne, et le dispositif d'arrêt axial comprend une bague disposée dans la rainure du moyeu du pignon conique et faisant saillie par rapport à la surface interne du moyeu du pignon conique pour former une butée axiale de l'arbre radial.
- l'ensemble d'engrenage comprend en outre deux paliers s'étendant autour du moyeu du pignon, et l'ensemble d'entraînement comprend en outre un distributeur d'alimentation en huile monté dans l'arbre radial, en communication de fluide avec les paliers.

L'invention concerne également une turbomachine comprenant un arbre moteur, un boitier d'accessoires, et un ensemble d'entrainement du boitier d'accessoires conforme à la description qui précède.

L'invention concerne enfin un procédé de montage d'un tel ensemble d'entrainement de boitier d'accessoires, comprenant les étapes consistant à :
- amener un ensemble d'engrenage dans un boitier de renvoi d'angle de carter au travers d'une ouverture dans la paroi externe de la virole du carter, et fixer ledit ensemble à une paroi du boitier de renvoi d'angle, ladite paroi séparant le boitier d'un bras axial creux du carter,
- engager un arbre radial dans ledit bras du carter au travers du moyeu d'un pignon de l'ensemble d'engrenage,
- amener un dispositif d'arrêt axial de l'arbre radial dans le moyeu du pignon, et
- fermer l'ouverture à la périphérie de la virole externe par un couvercle.

Le carter intermédiaire selon l'invention présente de nombreux avantages. Tout d'abord, en intégrant un boitier de renvoi d'angle, il permet de réduire la masse de la turbomachine, car d'une part le nombre de pièces supplémentaires à rapporter sur le carter pour assurer le fonctionnement du boitier d'accessoires est réduit, mais d'autre part ce carter intermédiaire permet de s'affranchir de l'arbre supplémentaire reliant le boitier de renvoi d'angles au train d'engrenage du boitier d'accessoires.

En outre, ce carter permet d'accéder facilement au bras radial dans lequel est disposé l'axe radial, notamment en passant par l'ouverture sur la paroi externe de la virole du carter.

L'ensemble d'entrainement du boitier d'accessoires comprenant un tel carter permet aussi, notamment grâce à cette ouverture, de lubrifier facilement les paliers de l'engrenage contenu dans le boitier de renvoi d'angle, et de récupérer l'huile.

Enfin, le montage et le démontage de cet ensemble d'entrainement est aisé, ce qui permet de réduire la durée et le coût des interventions de maintenance.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente schématiquement une turbomachine dans laquelle peut être mise en oeuvre l'invention.
- Les figures 2a, 2b et 2c représentent un carter intermédiaire selon un mode de réalisation de l'invention,
- Les figures 3a et 3b représentent une vue en coupe partielle d'un ensemble d'engagement d'un boitier d'accessoires comprenant un tel carter intermédiaire,
- La figure 4 représente la fixation d'un ensemble d'engrenage de l'ensemble d'engagement sur une paroi du boitier de renvoi d'angle.
- Les figures 5a à 5d représentent les étapes de montage d'un ensemble d'engagement,
- La figure 6 illustre sous forme de diagramme les étapes de montage de l'ensemble d'engagement.

### DESCRIPTION DETAILLEE D'AU MOINS UN MODE DE REALISATION DE L'INVENTION

En référence aux figures 2a à 2c, on a représenté un carter intermédiaire 10 de turbomachine, c'est-à-dire une partie de carter qui entoure une section de l'arbre moteur de la turbomachine comprise entre un compresseur basse pression et un compresseur haute pression. A cet égard, le carter intermédiaire est une pièce annulaire s'étendant autour, et centrée sur l'axe de l'arbre de rotation de la turbomachine.

Ce carter 10 comprend un moyeu interne 11, adapté pour recevoir l'arbre moteur de la turbomachine, une virole externe 12, et une pluralité de bras radiaux 13 s'étendant entre le moyeu et la virole.

La virole 12 comprend une paroi interne 14 reconstituant la partie supérieure de la veine du flux primaire de la turbomachine. La virole 12 comprend en outre deux parois latérales annulaires 15 et une pluralité d'entretoises.

La paroi interne 14s'étend circonférentiellement autour de l'axe de la turbomachine, et est comprise entre les deux parois latérales annulaires 15 s'étendant radialement par rapport à l'axe de la turbomachine, avec une pluralité d'entretoises 16 s'étendant entre les parois latérales et les reliant entre elles.

La paroi interne 14 relie entre elles les entretoises 16, qui sont réparties régulièrement sur la circonférence de la virole, et le cas échéant relie également les entretoises à l'une voire aux deux parois latérales 15.

Les entretoises 16 sont disposées dans une direction radiale autour de l'axe de la turbomachine et se trouvent dans le prolongement des bras radiaux 13.

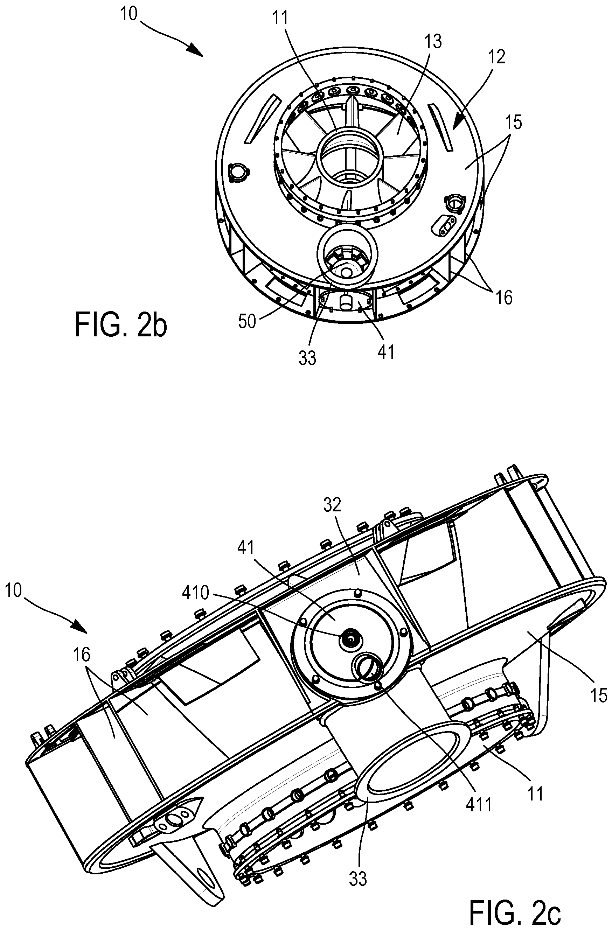

Comme visible sur la figure 2b, selon un mode de réalisation particulier, les entretoises 16 sont réparties en groupes de deux entretoises, les groupes de deux entretoises étant répartis régulièrement sur la circonférence de la virole, et en alignement avec les bras radiaux de sorte que les entretoises prolongent les bras radiaux 13 entre les parois latérales 15 de la virole.

L'ensemble du carter intermédiaire 10 comprenant le moyeu 11, les bras radiaux 13, les entretoises 16 et les parois interne 14 et latérales 15 de la virole, est moulé en fonderie d'une seule pièce.

De préférence, au moins un bras radial 13 est creux, c'est-à-dire qu'il comprend un logement interne qui débouche avantageusement du côté interne par rapport à l'axe de la turbomachine au travers d'une ouverture pratiquée dans le moyeu 11, et du coté externe au travers d'une ouverture pratiquée dans la paroi interne 14 de la virole, de manière à pouvoir recevoir un arbre radial 20 et à relier d'une part à l'arbre moteur de la turbomachine et d'autre part à une boite de renvoi d'angle 30. Avantageusement, mais facultativement, tous les bras radiaux 13 sont creux pour pouvoir alléger la structure et permettre le passage de servitudes.

Avantageusement, les deux entretoises 16 disposées dans le prolongement du (ou d'un) bras radial creux 13 sont davantage espacées que les autres groupes de deux entretoises, pour permettre l'intégration d'un ensemble d'engrenage comme décrit ci-après.

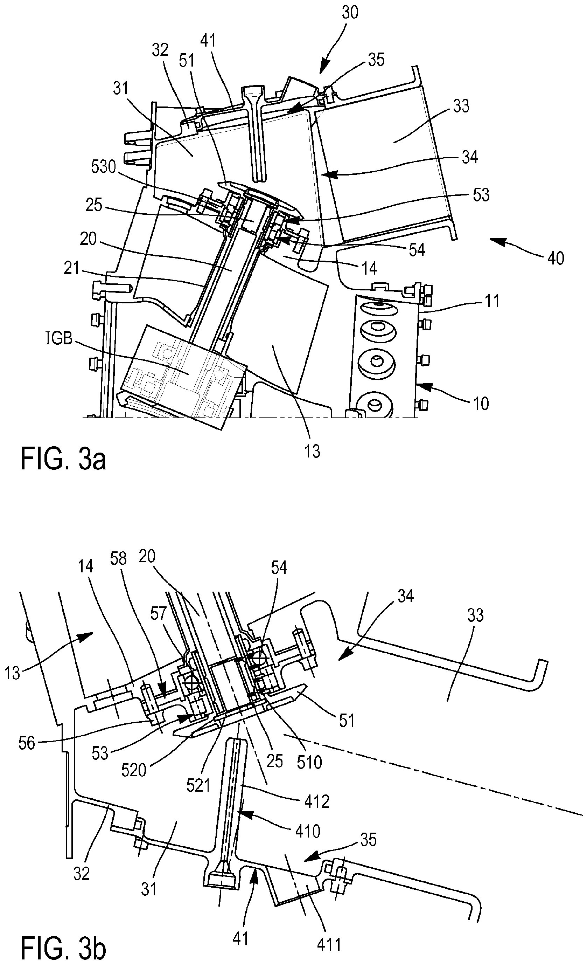

Comme visible sur la figure 3a, un arbre radial 20 s'étend dans un bras radial 13, et débouche d'un côté dans le moyeu où un engrenage conique intermédiaire ou IGB permet un premier renvoi d'angle entre l'arbre moteur et l'arbre radial, et au côté opposé dans un boitier de renvoi d'angle 30.

L'arbre radial 20 est avantageusement entouré, dans le bras radial 13, d'un fourreau d'étanchéité 21.

En outre, le boitier de renvoi d'angle 30 est agencé dans la virole externe 12, en étant formé intégralement - c'est-à-dire moulé d'une seule pièce - avec ladite virole 12, pour former une partie intégrante du carter 10.

Le boitier de renvoi d'angle comprend un logement 31 formé dans la virole externe, et qui est délimité axialement par les parois latérales 15, angulairement par un groupe de deux entretoises 16, et radialement d'une part par la paroi interne 14 de la virole, et d'autre part par une paroi 32 externe s'étendant à la périphérie de la virole, entre les deux entretoises 16. Alternativement, la virole 12 comprend une paroi externe s'étendant sur toute la circonférence de la virole.

Ce logement est le siège d'un engrenage conique entre l'arbre radial 20 et un train d'engrenage (non représenté) d'un boitier d'accessoires. A cet égard, et comme visible sur la figure 2c, le boitier de renvoi d'angle 30 comporte en outre un bras de liaison 33 avec un boitier d'accessoires, qui est creux et s'étend selon un axe non parallèle à la direction du bras radial dans lequel s'étend l'arbre radial.

Le logement 31 comprend une ouverture 34, aménagée dans une des parois latérales de la virole, pour communiquer avec le bras de liaison 33.

En outre, le logement 31 comprend une deuxième ouverture 35, aménagée à la périphérie de la virole, dans la paroi externe 32 de celle-ci. L'ouverture 35 est disposée en regard du bras radial 13 creux dans lequel est disposé l'arbre radial 20 afin de faire passer l'arbre radial 20 dans cette ouverture pour le positionner dans le bras 13.Comme décrit ci-après, cette ouverture permet aussi l'alimentation et la récupération de l'huile de lubrification de l'engrenage conique contenu dans le boitier de renvoi d'angle.

On va maintenant décrire, en référence aux figures 3a et 3b, un ensemble d'entrainement 40 d'un boitier d'accessoires, qui comprend le carter 10 précédemment décrit, un arbre radial 20 disposé dans un bras radial 13 dudit carter, ainsi qu'un ensemble d'engrenage 50, pour l'engrenage de l'arbre radial 20 à un train d'engrenage d'un boitier d'accessoires.

L'ensemble d'engrenage 50 est monté sur l'extrémité externe de l'arbre radial 20 et comprend notamment un pignon conique 51, comprenant un moyeu 510 recevant l'extrémité de l'arbre radial. Le moyeu 510 du pignon et l'arbre radial sont solidaires en rotation pour assurer la transmission du mouvement de l'arbre au pignon conique 51.

L'ensemble d'engrenage 51 comprend en outre un dispositif d'arrêt axial 52 de l'arbre radial dans le moyeu 510 du pignon.

Selon un mode de réalisation préféré, le dispositif d'arrêt axial 52 comprend une rainure circonférentielle 520 réalisée sur la surface interne du moyeu 510, et une bague 521, dimensionnée pour être insérée dans ladite rainure de sorte qu'une fois en position dans la rainure la bague fasse saillie circonférentiellement par rapport à la surface interne du moyeu 510. Pour ce faire, la bague 521 présente avantageusement un diamètre égal au diamètre de la rainure, et une dimension radiale supérieure à la profondeur de la rainure.

Ainsi, une fois l'arbre radial 20 monté à l'intérieur du moyeu 510 du pignon, on peut positionner la bague dans la rainure et l'arbre vient ensuite en butée contre la bague.

L'ensemble d'engrenage 50 comprend en outre deux paliers 53, 54 de fixation du pignon dans le logement 31, les paliers étant montés adjacents autour du moyeu 510, de sorte qu'ils soient compris entre la paroi interne 14 de la virole et le pignon 51.

Le palier le plus externe 53 comprend un support 530 qui est monté à la paroi interne du logement par boulonnage ou vissage, ce qui permet de maintenir également le deuxième palier 54 entre la paroi et ce premier palier 53.

L'ensemble d'engrenage comprend en outre une entretoise 57 disposée entre les paliers 53, 54, et une cale de réglage 58 s'étendant entre la paroi interne du logement et le palier le plus interne 54, ces éléments permettant de caler axialement les paliers pour assurer une bonne transmission des efforts du pignon 51 au carter 10.

Le fait d'avoir les deux paliers compris entre la cale de réglage 58 et le pignon 51 rend possible le montage et le démontage de l'ensemble d'engrenage du reste du carter 10 sans recourir à un élément de carter supplémentaire qui contient cet ensemble, ce qui représente un gain en terme de masse et de facilité de montage pour la fabrication et la maintenance, et donc une diminution des coûts d'utilisation et de fabrication de l'ensemble d'entrainement.

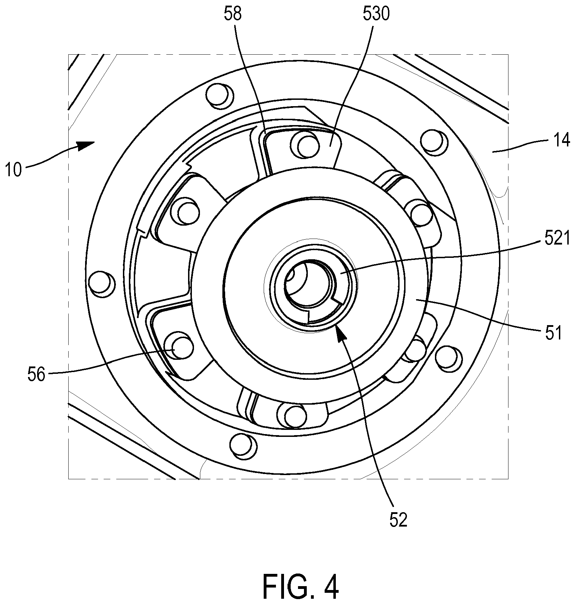

Le support 530 du palier 53 et la cale de réglage 58 s'étendent avantageusement circonférentiellement autour du moyeu du pignon pour pouvoir être vissés ensemble à la paroi par une pluralité de vis 56 réparties de préférence régulièrement autour du moyeu 510 comme sur la figure 4.

Le palier 53 est un palier à billes, et l'autre 54 est un palier à rouleaux. Ces deux roulements sont positionnés du même coté du pignon conique (contrairement à une solution conventionnelle ou le pignon conique est entre les deux paliers). Cette disposition est autorisée lorsque la situation dynamique de l'arbre est saine et que sa vitesse critique est élevée, ce qui est le cas ici car l'arbre est court du fait d'une part que le boitier de renvoi d'angle se trouve intégré au carter, et d'autre part que le boitier d'accessoires est placé sur le carter sans déport axial, c'est-à-dire, sans la nécessité d'ajouter un arbre supplémentaire de transfert de mouvement entre ce boitier et le boitier de renvoi d'angle.

En dévissant les vis 56 par l'extérieur (en passant par l'ouverture 35), il est possible de retirer l'ensemble d'engrenage 50 avec ses paliers et ses supports paliers en une seule opération, sans pour cela avoir à le démonter.

L'arbre radial 20 comprend avantageusement un distributeur d'huile 25, qui est une pièce cylindrique montée à l'intérieur de l'extrémité de l'arbre, cette extrémité se trouvant elle-même dans le moyeu du pignon 51. De plus le pignon, le distributeur, et l'arbre sont configurés pour autoriser une circulation d'huile entre le distributeur 25 et les ensembles de paliers 53, 54.

Ainsi l'ensemble d'engrenage, qui comprend les ensembles de paliers 53, 54 montés autour du pignon 51 et le pignon lui-même, peut être assemblé avant son montage par fixation des paliers et de la cale sur la paroi interne de la virole 12. Ce montage est simple puisque, comme illustré sur la figure 4, il suffit d'engager les vis 56 dans la paroi interne de la virole 12 au travers du support 530 du palier 53 et de la cale de réglage 58.

Comme visible sur les figures 3a et 3b, l'ensemble d'engagement 40 comprend en outre un couvercle 41 qui est monté sur la virole 12 pour fermer l'ouverture 35 aménagée à sa périphérie. Il peut néanmoins être retiré pour pouvoir accéder à l'intérieur du logement 31, afin de réaliser une maintenance facilement.

Le couvercle 41 comprend une connexion d'admission d'huile 410 et une connexion d'évacuation d'huile 411, ces deux connexions étant ensuite raccordées à des branches d'un circuit de circulation d'huile.

La connexion d'alimentation d'huile 410 comprend en outre une protubérance 412 s'étendant dans l'intérieur du logement 31 vers le pignon conique 51, permettant, par injection d'huile sous pression, de faire pénétrer de l'huile dans le logement 31 jusqu'au pignon 51 qui est ainsi lubrifié, et jusqu'à l'intérieur de son moyeu 510, dans le distributeur d'huile 25, qui par l'effet centrifuge répartit ensuite l'huile dans les ensembles de paliers 53, 54 pour assurer leur lubrification.

Le logement 31 constitue ainsi une enceinte de lubrification de l'engrenage conique contenu dans le boitier de renvoi d'angle.

En outre, comme illustré sur la figure 2a, lorsque l'ensemble d'entrainement 40 est monté dans une turbomachine par exemple conforme à la figure 1, le carter est positionné de sorte que le boitier de renvoi d'angle 30 se trouve à l'aplomb de l'arbre moteur de la turbomachine, en dessous de celui-ci (« à 6 heures »). Ainsi, l'ouverture 35 du logement et le couvercle 41 se trouve en-dessous de l'engrenage conique entre l'arbre radial 20 et le boitier d'accessoires, de sorte que l'huile servant à la lubrification de l'ensemble d'engrenage 50 peut retomber par gravité à la base du logement 31 et s'écouler hors du logement par la connexion d'évacuation d'huile 411 du couvercle.

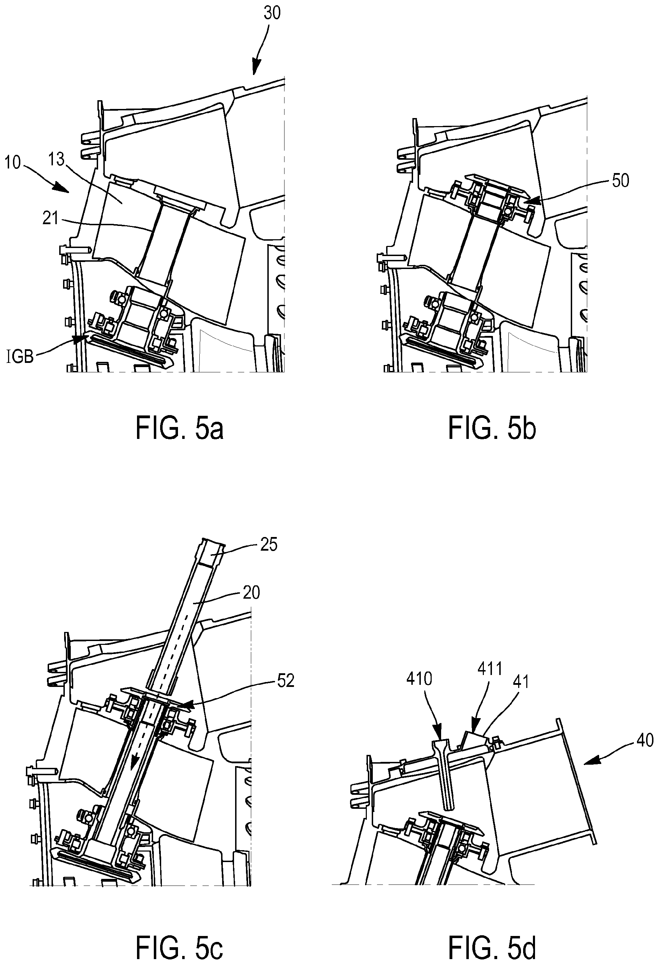

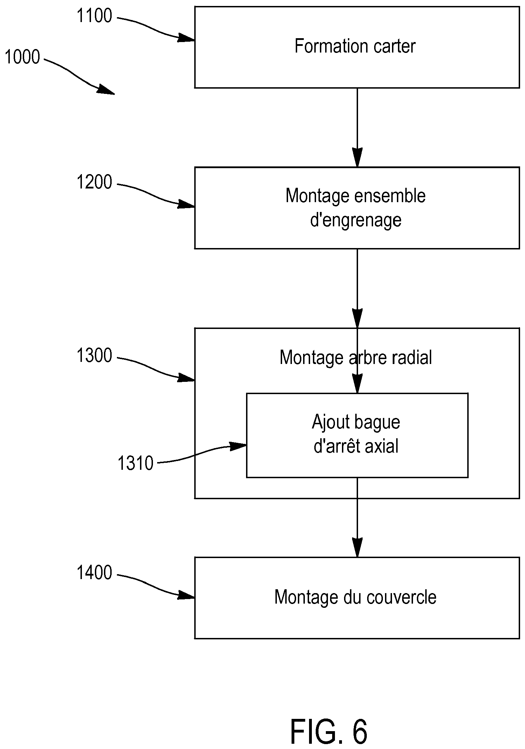

On va maintenant décrire, en référence aux figures 5a à 5d et à la figure 6, un procédé de montage 1000 d'un ensemble d'entrainement 40.

Au cours d'une première étape 1100, on réalise par fonderie un carter 10 comprenant un boitier de renvoi d'angle 30 formé intégralement dans la virole du carter.

Une fois le carter réalisé, on fixe à l'intérieur de son moyeu central 11 un engrenage conique intermédiaire IGB, comme représenté en figure 5a, cet engrenage étant adapté pour engrener avec un engrenage complémentaire d'un arbre moteur de turbomachine, non représenté sur la figure.

Au cours d'une étape 1200, on amène, au travers de l'ouverture 35 du carter pratiquée à la périphérie de la virole (dans la paroi externe 32) un ensemble d'engrenage 50 d'un arbre radial avec un boitier d'accessoires (non représenté sur la figure). On fixe, comme illustré sur la figure 5b, au moyen d'une pluralité de vis 56, cet ensemble sur la paroi interne 14 de la virole 12, à l'extrémité du bras radial 13.

En référence à la figure 5c, on amène ensuite 1300 un arbre radial dans le bras radial en le faisant passer au travers de l'ouverture 35, et dans le moyeu 510 du pignon conique de l'ensemble d'engrenage. Cet arbre radial est engagé, à son extrémité interne, à l'engrenage conique intermédiaire IGB, et à son extrémité externe au moyeu 510 du pignon 51.

Avantageusement, on amène 1310 dans une rainure 520 du moyeu 510 du pignon prévue à cet effet, une bague 521 d'arrêt axial de l'arbre radial dans le moyeu 510.

Enfin, en référence à la figure 5d, on ferme ensuite l'ouverture 35 au moyen du couvercle 41 au cours d'une étape 1400.

L'assemblage d'un boitier d'accessoires à cet ensemble d'entrainement peut être réalisé ultérieurement en positionnant un train d'engrenage du boitier dans le logement 31, en liaison d'engrenage avec le pignon conique, et en fixant le boitier d'accessoires au bras de liaison 33 du boitier de renvoi d'angle.

La solution proposée permet d'intégrer un boitier de renvoi d'angle dans un carter intermédiaire, en montant facilement un arbre radial et un ensemble d'engrenages au travers d'une ouverture pratiquée dans le boitier. Cette facilité permet un gain de temps dans le montage ou le démontage au cours d'une maintenance, et donc un gain en termes de coût de fabrication et d'entretien.

En outre, ce montage compact permet de supprimer des pièces supplémentaires (comme par exemple la structure du boitier de renvoi d'angle qui était préalablement une pièce supplémentaire rapportée sur le carter) et donc d'alléger la turbomachine.

## Revendications

1. Carter intermédiaire (10) de turbomachine, comprenant :
- un moyeu interne (11), adapté pour recevoir un arbre de compresseur de turbomachine,
- une virole externe (12), et
- une pluralité de bras radiaux (13) reliant le moyeu et la virole, l'un des bras comprenant un logement interne d'arbre radial (20) d'entrainement de machines auxiliaires, le carter comprenant en outre un boitier de renvoi d'angle (30) de l'arbre radial (20) agencé dans la virole externe (12), ledit boitier étant formé intégralement avec la virole externe (12), **caractérisé en ce que** le boitier de renvoi d'angle (30) comprend un logement d'engrenage (31) entre un arbre radial et un boitier d'accessoires, ledit logement (31) comprenant une ouverture (35) débouchant à la périphérie de la virole externe (12).

2. Carter intermédiaire (10) selon la revendication 1, dans lequel le boitier de renvoi d'angle (30) comprend en outre un bras de liaison (33) avec un boitier d'accessoires, ledit bras étant creux pour recevoir un train d'engrenage du boitier d'accessoires, et le logement d'engrenage (31) comprenant en outre une ouverture (34) de communication avec ledit bras.

3. Carter intermédiaire selon l'une des revendications 1 ou 2, dans lequel l'ouverture (35) du logement (31) est disposée en regard du bras radial (13) comprenant un logement interne d'arbre radial (20).

4. Ensemble d'entraînement (40) d'un boitier d'accessoires de turbomachine, comprenant un carter intermédiaire (10), un arbre radial (20) s'étendant dans un bras radial (13) du carter, un ensemble d'engrenage (50) de l'arbre radial à un boitier d'accessoires, monté à une extrémité de l'arbre radial, et un boitier de renvoi d'angle (30) de l'arbre radial,
**caractérisé en ce que** le carter intermédiaire (10) est un carter selon l'une des revendications précédentes, le boitier de renvoi d'angle (30) étant formé intégralement dans ledit carter.

5. Ensemble d'entrainement (40) selon la revendication précédente, comprenant en outre un couvercle (41) couvrant l'ouverture (35) du logement à la périphérie de la virole (12), ledit couvercle (41) comprenant une connexion d'admission d'huile (410) et une connexion d'évacuation d'huile (411).

6. Ensemble d'entrainement (40) selon l'une des revendications 4 ou 5, dans lequel l'ensemble d'engrenage (50) comporte un pignon conique (51) comprenant un moyeu (510) adapté pour recevoir l'extrémité de l'arbre radial (20), et l'ensemble d'engrenage comprend un dispositif d'arrêt axial (52) de l'arbre radial dans le moyeu du pignon.

7. Ensemble d'entraînement (40) selon la revendication précédente, dans lequel le moyeu du pignon conique (510) comprend une rainure circonférentielle (520) interne, et le dispositif d'arrêt axial (52) comprend une bague (521) disposée dans la rainure du moyeu du pignon conique et faisant saillie par rapport à la surface interne du moyeu du pignon conique pour former une butée axiale de l'arbre radial.

8. Ensemble d'entraînement (40) selon l'une des revendications 6 ou 7, dans lequel l'ensemble d'engrenage (50) comprend en outre deux paliers (53, 54) s'étendant autour du moyeu (510) du pignon conique, et l'ensemble d'entraînement (40) comprend en outre un distributeur d'alimentation (25) en huile monté dans l'arbre radial (20), en communication de fluide avec les paliers (53, 54).

9. Turbomachine (1), comprenant un arbre moteur, un boitier d'accessoires (AGB), et un ensemble d'entrainement (40) du boitier d'accessoires selon l'une des revendications 4 à 8.

10. Procédé de montage d'un ensemble d'entrainement (40) de boitier d'accessoires selon l'une des revendications 4 à 8, comprenant les étapes consistant à :
- amener (1200) un ensemble d'engrenage (50) dans un boitier de renvoi d'angle de carter (10) au travers d'une ouverture dans la paroi externe de la virole du carter, et fixer ledit ensemble à une paroi (14) du boitier de renvoi d'angle, ladite paroi séparant le boitier d'un bras axial (13) creux du carter (10),
- engager (1300) un arbre radial (20) dans ledit bras du carter (13) au travers du moyeu (510) d'un pignon (51) de l'ensemble d'engrenage (50),
- amener (1310) un dispositif d'arrêt axial (52) de l'arbre radial dans le moyeu du pignon, et
- fermer (1400) l'ouverture (35) à la périphérie de la virole externe (12) par un couvercle (41).

## Patentansprüche

1. Zwischengehäuse (10) für eine Turbomaschine, umfassend:
- einen internen Flansch (11), der zur Aufnahme einer Kompressorwelle der Turbomaschine ausgebildet ist,
- eine externe Ummantelung (12), und
- eine Vielzahl radialer Arme (13), welche den Flansch und die Ummantelung verbinden, wobei einer der Arme eine innere Aufnahme einer radialen Antriebswelle (20) von Hilfsmaschinen umfasst,
wobei das Gehäuse ferner ein Winkelgetriebegehäuse (30) der radialen Welle (20) umfasst, das in der externen Ummantelung (12) ausgebildet ist, wobei das Gehäuse vollständig mit der externen Ummantelung (12) gebildet ist, **dadurch gekennzeichnet, dass** das Winkelgetriebegehäuse (30) eine Getriebeaufnahme (31) zwischen einer radialen Welle und einem Hilfsgetriebe umfasst, wobei die Aufnahme (31) eine Öffnung (35) umfasst, die auf dem Umfang der externen Ummantelung (12) ausmündet.

2. Zwischengehäuse (10) nach Anspruch 1, wobei das Winkelgetriebegehäuse (30) ferner einen Verbindungsarm (33) mit einem Hilfsgetriebe umfasst, wobei der Arm hohl ist, um einen Getriebezug des Hilfsgetriebe aufnehmen zu können, und die Getriebeaufnahme (31) ferner eine Kommunikationsöffnung (34) mit dem Arm umfasst.

3. Zwischengehäuse nach einem der Ansprüche 1 oder 2, wobei die Öffnung (35) der Aufnahme (31) gegenüber dem radialen Arm (13) angeordnet ist, der eine innere Aufnahme einer radialen Welle (20) umfasst.

4. Antriebseinheit (40) eines Hilfsgetriebe einer Turbomaschine, umfassend ein Zwischengehäuse (10), eine radiale Welle (20), die sich in einem radialen Arm (13) des Gehäuses erstreckt, eine Getriebeeinheit (50) von der radialen Welle zu einem Hilfsgetriebe, das an einem Ende der radialen Welle montiert ist, und ein Winkelgetriebegehäuse (30) der radialen Welle,
**dadurch gekennzeichnet, dass** das Zwischengehäuse (10) ein Gehäuse nach einem der vorangehenden Ansprüche ist, wobei das Winkelgetriebegehäuse (30) vollständig in dem Gehäuse gebildet ist.

5. Antriebseinheit (40) nach vorangehendem Anspruch, umfassend ferner einen Deckel (41), welcher die Öffnung (35) der Aufnahme auf dem Umfang der Ummantelung (12) bedeckt, wobei der Deckel (41) eine Öleinlassverbindung (410) und eine Ölauslassverbindung (411) umfasst.

6. Antriebseinheit (40) nach einem der Ansprüche 4 oder 5, wobei die Getriebeeinheit (50) ein konisches Zahnrad (51) aufweist, welches einen Flansch (510) aufweist, der ausgebildet ist, um das Ende der radialen Welle (20) aufzunehmen, und die Getriebeeinheit eine Axialstoppvorrichtung (52) der radialen Welle im Flansch des Zahnrads umfasst.

7. Antriebseinheit (40) nach vorangehendem Anspruch, wobei der Flansch des konischen Zahnrads (510) eine interne Umfangsrille (520) umfasst, und die Axialstoppvorrichtung (52) einen Ring (521) umfasst, der in der Rille des Flanschs des konischen Zahnrads angeordnet ist und in Bezug zu der internen Fläche des Flanschs des konischen Zahnrads hervorsteht, um einen axialen Anschlag der radialen Welle zu bilden.

8. Antriebseinheit (40) nach einem der Ansprüche 6 oder 7, wobei die Getriebeeinheit (50) ferner zwei Lager (53, 54) umfasst, die sich um den Flansch (510) des konischen Zahnrads erstrecken, und die Antriebseinheit (40) ferner einen Ölversorgungsspender (25) in der radialen Welle (20) in Fluidkommunikation mit den Lagern (53, 54) umfasst.

9. Turbomaschine (1), umfassend eine Motorwelle, ein Hilfsgetriebe (AGB) und eine Antriebseinheit (40) des Hilfsgetriebes nach einem der Ansprüche 4 bis 8.

10. Montageverfahren einer Antriebseinheit (40) eines Hilfsgetriebes nach einem der Ansprüche 4 bis 8, umfassend die folgenden Schritte:
- Einführen (1200) einer Getriebeeinheit (50) in ein Winkelgetriebegehäuse (10) durch eine Öffnung in der Außenwand der Ummantelung des Gehäuses, und Befestigen der Einheit an einer Wand (14) des Winkelgetriebegehäuse, wobei die Wand das Gehäuse von einem hohlen axialen Arm (13) des Gehäuses (10) trennt,
- Einsetzen (1300) einer radialen Welle (20) in den Arm des Gehäuses (13) durch den Flansch (510) eines Zahnrads (51) der Getriebeeinheit (50),
- Einführen (1310) einer Axialstoppvorrichtung (52) der radialen Welle in den Flansch des Zahnrads, und
- Verschließen (1400) der Öffnung (35) auf dem Umfang der externen Ummantelung (12) mit einem Deckel (41).

## Claims

1. A turbomachine intermediate casing (10), comprising:
- an inner hub (11) adapted to receive a turbomachine compressor shaft,
- an outer ferrule (12), and
- a plurality of radial arms (13) connecting the hub and the ferrule, one of the arms comprising an inner housing for a radial shaft (20) for driving auxiliary machines,
the casing further comprising an angle gearbox (30) of the radial shaft (20) arranged in the outer ferrule (12), said gearbox being integrally formed with the outer ferrule (12), **characterized in that** the angle gearbox (30) comprises a gear housing (31) between a radial shaft and an accessory gearbox, said housing (31) comprising an opening (35) terminating at the periphery of the outer ferrule (12).

2. The intermediate casing (10) according to claim 1, wherein the angle gearbox (30) further comprises a linking arm (33) with an accessory gearbox, said arm being hollow to receive a gear train of the accessory gearbox, and the gear housing (31) further comprising an opening (34) for communication with said arm.

3. The intermediate casing according to one of claims 1 or 2, wherein the opening (35) of the housing (31) is arranged facing the radial arm (13) comprising an inner housing for a radial shaft (20).

4. A drive assembly (40) of a turbomachine accessory gearbox, comprising an intermediate casing (10), a radial shaft (20) extending in a radial arm (13) of the casing, a gear assembly (50) of the radial shaft to an accessory gearbox, mounted at an end of the radial shaft, and an angle gearbox (30) of the radial shaft,
**characterized in that** the intermediate casing (10) is a casing according to one of the preceding claims, the angle gearbox (30) being integrally formed in said casing.

5. The drive assembly (40) according to the preceding claim, further comprising a cover (41) covering the opening (35) of the housing on the periphery of the ferrule (12), said cover (41) comprising an oil admission connection (410) and an oil evacuation connection (411).

6. The drive assembly (40) according to one of claims 4 or 5, wherein the gear assembly (50) comprises a bevel pinion (51) comprising a hub (510) adapted to receive the end of the radial shaft (20), and the gear assembly comprises an axial stop device (52) of the radial shaft in the hub of the pinion.

7. The drive assembly (40) according to the preceding claim, wherein the hub of the bevel pinion (510) comprises an inner circumferential groove (520), and the axial stop device (52) comprises a ring (521) arranged in the groove of the hub of the bevel pinion and projecting relative to the inner surface of the hub of the bevel pinion to form an axial stop of the radial shaft.

8. The drive assembly (40) according to one of claims 6 or 7, wherein the gear assembly (50) further comprises two bearings (53, 54) extending around the hub (510) of the bevel pinion, and the drive assembly (40) further comprises an oil supply distributor (25) mounted in the radial shaft (20), in fluid communication with the bearings (53, 54).

9. A turbomachine (1), comprising a motor shaft, an accessory gearbox (AGB), and a drive assembly (40) of the accessory gearbox according to one of claims 4 to 8.

10. A method for mounting a drive assembly (40) of an accessory gearbox according to one of claims 4 to 8, comprising the steps of:
- guiding (1200) a gear assembly (50) in a casing angle gearbox (10) through an opening in the outer wall of the ferrule of the casing, and fixing said assembly to a wall (14) of the angle gearbox, said wall separating the gearbox from a hollow axial arm of the casing (10),
- engaging (1300) a radial shaft (20) into said arm of the casing (13) through the hub (510) of a pinion (51) of the gear assembly (50),
- guiding (1310) an axial stop device (52) of the radial shaft into the hub of the pinion, and
- closing (1400) the opening (35) at the periphery of the outer ferrule (12) by a cover (41).
